# EUROPÄISCHE PATENTSCHRIFT

(11) **EP 2 385 272 B1**
(45) Veröffentlichungstag und Bekanntmachung des Hinweises auf die Patenterteilung: **15.01.2014**
(21) Anmeldenummer: 11002362.9
(22) Anmeldetag: 22.03.2011
(51) Int. Cl.: F16H 7/12, F16H 7/08

(54) **Spanner und Endlostriebanordnung**
Clamp and endless drive assembly
Tendeur et agencement d'entraînement sans fin

(30) Priorität: 06.05.2010 DE 102010019613
(43) Veröffentlichungstag der Anmeldung: 09.11.2011
(73) Patentinhaber: Litens Automotive GmbH, 63517 Gelnhausen (DE)
(72) Erfinder: Adam, Jörn, 63571 Gelnhausen (DE); Walter, Ingo, 63584 Gründau (DE)
(74) Vertreter: Grünecker, Kinkeldey, Stockmair & Schwanhäusser

(56) Entgegenhaltungen:
- EP-A1- 1 464 871
- DE-A1- 10 253 450
- DE-A1-102007 042 501
- US-A1- 2002 039 944

## Beschreibung

Die vorliegende Erfindung betrifft eine Endlostriebanordnung gemäß dem Oberbegriff von Anspruch 1.

Die vorliegende Erfindung weist einen Spanner für einen Endlostrieb auf, insbesondere einen Riementrieb, mit einem ersten Spannarm und einem zweiten Spannarm, wobei der erste und der zweite Spannarm um eine gemeinsame erste Schwenkachse schwenkbar sind und in Richtung zueinander kraftbeaufschlagt sind. An dem ersten Spannarm ist ein um eine erste Drehachse drehbares erstes Spannrad vorgesehen und an dem zweiten Spannarm ein um die zweite Drehachse drehbares zweites Spannrad.

Eine gattungsgemäße Endlostriebanordnung ist aus der DE 10 2007 042 501 A1 bekannt.

Seit den 1990er Jahren werden immer mehr Motoren mit Starter-Generator entwickelt, um den Verbrauch zu reduzieren. Aus der im Jahre 2002 angemeldeten gattungsgemäßen DE 102 53 450 A1 und der im Jahre 2003 angemeldeten EP 1 464 871 A1 sind an einem Starter-Generator befestigte Spanner mit zwei V-artig angeordneten Spannarmen bekannt. Die Spannarme sind in Richtung zueinander federbeaufschlagt und um eine gemeinsame Schwenkachse relativ zueinander schwenkbar, um einen Riemen, welcher um ein Riemenrad des Starter-Generators geführt ist, zu spannen und dabei einen möglichst großen Umschlingungswinkel um das Riemenrad aufrechtzuerhalten. Zusätzlich sind sie um dieselbe Achse auch als Einheit schwenkbar, um eine Verschiebung der Längen der Riemenabschnitte auszugleichen, welche auftreten, wenn der Starter-Generator vom Starterbetrieb in den Generatorbetrieb wechselt und umgekehrt, wenn es also einen Wechsel von Lasttrum und Leertrum gibt. Denn ein Riemenabschnitt, der zuvor Zugtrum war und Leertrum wird, verlängert sich und ein Riemenabschnitt, der Leertrum war und Lasttrum wird, verkürzt sich.

Weitere Spanner mit zwei V-artig angeordneten Spannarmen sind beispielsweise aus der US 2004/0171448 A1 bekannt.

Zwar können Spanner mit V-artig angeordneten Spannarmen einem Wechsel von Lasttrum und Zugtrum gut folgen. Es besteht jedoch die Gefahr, dass sich die Spannarme bei im Betrieb stärker ansteigender Riemenspannung zu weit auseinanderbewegen und sich hierdurch der Umschlingungswinkel des Riemenrades des Starter-Generators zu stark verringert. Bei zu geringem Umschlingungswinkel ist jedoch eine ausreichende Kraftübertragung zwischen Riemen und dem Riemenrad des Starter-Generators nicht mehr gewährleistet. Einem zu starken Öffnen der Spannarme kann mit einer entsprechend hohen Federspannkraft entgegengewirkt werden. Hierdurch erhöht sich jedoch die Grundspannung des Riemens, was die Lebensdauer des Riemens verkürzt und außerdem zu einer höheren Verlustleistung im Riementrieb führt.

Aus der EP 1 122 464 A1 ist ein Spanner bekannt, mit welchem einem zu starken Verringern des Umschlingungswinkels an einem Riemenrad eines Starter-Generators gut begegnet werden kann. Dabei sind die Spannräder des Spanners an einem einzigen Spannarm vorgesehen. Eines der Spannräder ist in der Nähe einer Schwenkachse des Spannarmes vorgesehen und das andere Spannrad ist an einem davon deutlich entfernten Ende des Spannarmes angeordnet. Durch ein Schwenken des Spannarmes wird eine Längenverschiebung der Riemenabschnitte bei einem Wechsel von Lasttrum und Leertrum gut ausgeglichen. Um zu verhindern, dass das entfernt angeordnete Spannrad zu stark nachgibt, wenn an ihm das Lasttrum anliegt und an dem anderen Spannrad das Leertrum, ist jedoch eine hohe Federspannkraft erforderlich was ein hohes Grundspannungsniveau für den Riemen bedeutet. Das heißt auch bei diesem Spanner geht das Erreichen eines guten Umschlingungswinkels mit einer erhöhten Grundspannung im Riemen einher.

Aus der bereits im Jahr 1992 angemeldeten DE 42 43 451 A1 sind ebenfalls Spanner mit zwei Armen bekannt. Diese Spanner sind zum Ausgleichen von Transversalschwingungen gedacht, die durch Ungleichförmigkeiten von Kurbelwellenumdrehungen hervorgerufen werden. Dabei ist ein Dämpfungssystem vorgesehen, mit welchem ein Bewegen der Spannarme relativ zueinander stärker gedämpft wird als ein Schwenken der Spannarme als Einheit. Hierdurch wird erreicht, dass die Transversalschwingungen nur durch die letztgenannte Dämpfung gedämpft werden. Die Druckschrift schlägt verschiedene Aufbauten vor, in welchen das Dämpfungssystem realisiert ist. In zwei Ausführungsformen sind V-artige Spanner vorgesehen, bei welchen eine erste Lagerung, mit welcher die Spannarme als Einheit schwenkbar sind, konzentrisch zu einer zweiten Lagerung vorgesehen ist, mit welcher die durch eine Schraubenfeder voneinander weg kraftbeaufschlagten Spannarme relativ zueinander drehbar sind. Jeder Lagerung ist ein eigenes Reibelement zugeordnet.

In einer anderen Ausführungsform ist der erste Spannarm um die gemeinsame Achse schwenkbar gelagert und der zweite Spannarm ist nahe der gemeinsamen Schwenkachse federbeaufschlagt an den ersten Spannarm schwenkbar angelenkt, wodurch eine bauliche Trennung der beiden Dämpfungen erreicht wurde. Auch in dieser Ausführungsform drückt die Schraubenfeder die Spannarme auseinander.

In einer weiteren Ausführungsform sind die beiden Spannarme rohrförmig ausgebildet und teleskopartig ineinandergeführt, so dass sie relativ zueinander axial verschieblich sind. Die Relativbewegung der Spannarme zueinander wird wiederum durch eine andere Reibanordnung gedämpft als ein axiales Bewegen der Spannarme als Einheit.

Schließlich offenbart die Druckschrift eine Ausführungsform, in welcher zwei Spannarme voneinander beabstandet separat an einem ortsfesten Bauteil jeweils um eine eigene Achse schwenkbar angelenkt und durch eine jeweils eigene Reibhülse in ihrer Schwenkbewegung gedämpft sind. Eine Schraubenfeder verbindet die beiden Spannarme und ist in einer Reibhülse angeordnet, welche wiederum in einer metallenen Hülse vorgesehen ist.

Der vorliegenden Erfindung liegt die Aufgabe zugrunde, eine gattungsgemäße Endlostriebanordnung mit einem Spanner anzugeben, mit welchem auf möglichst einfache Weise in einer Endlostriebanordnung mit Starter-Generator ein guter Umschlingungswinkel eines Endlostriebes um eine Endlostriebrad aufrechterhalten werden kann, durch einen Wechsel von Lasttrum und Leertrum hervorgerufene Längenverschiebungen von Abschnitten des Endlostriebs gut ausgeglichen werden können und dennoch eine moderate Grundspannung des Endlostriebs realisierbar ist.

Die Aufgabe wird erfindungsgemäß gelöst mit einer Endlostriebanordnung mit den Merkmalen des Anspruches 1.

Mit den in Richtung zueinander kraftbeaufschlagten Spannarmen kann der Spanner einen guten Umschlingungswinkel um das Endlostriebrad aufrechterhalten, selbst wenn es zu einem Wechsel von Lasttrum und Leertrum kommt, wobei der Spanner den mit diesem Wechsel einhergehenden Längenverschiebungen von Endlostriebabschnitten durch die Exzentrizität zwischen der ersten und der zweiten Schwenkachse gut folgen kann. Darüber hinaus ist es mit diesem Spanner gleichzeitig möglich, ein moderates Grundspannungsniveau des Endlostriebes zu realisieren.

Besonders bevorzugt kann der Spanner zwischen einer ersten Stellung, in welcher, wenn das erste Trum Zugtrum ist, eine resultierende Kraft an dem ersten Spannrad mit einer die zweite Schwenkachse und die erste Drehachse verbindenden Linie einen ersten Winkel einschließt, der kleiner als 30° ist, und einer zweiten Stellung bewegbar sein, in welcher, wenn das zweite Trum Zugtrum ist, eine resultierende Kraft an dem zweiten Spannrad mit einer die zweite Schwenkachse und die zweite Drehachse verbindenden Linie einen zweiten Winkel einschließt, der kleiner als 30° ist. Dadurch, dass der erste Winkel kleiner als 30° ist, wenn das erste Trum Zugtrum ist, und der zweite Winkel kleiner als 30° ist, wenn das zweite Trum Zugtrum ist, wird ein guter Teil der betreffenden resultierenden Kraft als Zugkraft von dem jeweiligen Spannarm aufgenommen. Hierdurch ist weniger Federkraft zum Spannen der beiden Spannarme notwendig. Durch eine verringerte Federspannkraft verringert sich das Grundspannungsniveau des Endlostriebes.

Vorteilhafterweise kann der erste Winkel in der ersten Stellung und/oder der zweite Winkel in der zweiten Stellung kleiner als 25° sein, vorzugsweise kleiner als 20°, besonders bevorzugt kleiner als 15°. Je kleiner der Winkel ist, desto höher ist der Anteil der resultierenden Kraft, welcher vom betreffenden Spannarm als Zugkraft aufgenommen werden kann. Entsprechend kann eine kleinere Federspannkraft zum Spannen der beiden Spannarme verwendet werden, wodurch das Grundspannungsniveau des Endlostriebes noch weiter verringert werden kann. Trotzdem ist der Spanner noch in der Lage, Spannungsspitzen im Endlostrieb gut abzubauen.

Bevorzugterweise kann der erste Spannarm dem Trum zugeordnet sein, bei welchem im Betrieb der Endlostriebanordnung die höchsten Endlostriebspannungen auftreten. Somit kann ein großer Teil der resultierenden Kraft am ersten Spannrad über die Lagerung des Spanners an der ersten Schwenkachse aufgenommen werden. Dadurch reicht eine kleinere Federkraft zum Spannen der Spannarme aus, wodurch das Grundspannungsniveau des Endlostriebs verringert werden kann.

Günstigerweise kann ein Winkel, welcher zwischen einer die zweite Schwenkachse mit der ersten Drehachse verbindenden Linie und einer die zweite Schwenkachse mit der zweiten Drehachse verbindenden Linie eingeschlossen ist, während eines Bewegens des Spanners von einer ersten Stellung, in welcher das erste Trum Zugtrum ist, in eine zweite Stellung, in welcher das zweite Trum Zugtrum ist, und/oder umgekehrt im Wesentlichen gleich bleiben. So ist während eines Wechsels von Lasttrum und Leertrum nur wenig oder keine Federarbeit zu leisten und der Umschlingungswinkel um das Endlostriebrad bleibt im Wesentlichen gleich.

Besonders vorteilhaft kann sich der Winkel um weniger als 10° ändern, vorzugsweise um weniger als 5°. Je weniger sich der Winkel ändert, desto weniger Federarbeit ist notwendig und desto besser bleibt der Umschlingungswinkel erhalten.

Besonders vorteilhaft kann ein Winkel, welcher zwischen einer die zweite Schwenkachse mit der ersten Drehachse verbindenden Linie und einer die zweite Schwenkachse mit der zweiten Drehachse verbindenden Linie eingeschlossen ist, etwa 60° bis 90° betragen. Damit ist jeweils eine gute Kraftaufnahme an dem das Lasttrum spannenden Spannarm möglich, bei welcher ein guter Teil der resultierenden Kraft des betreffenden Spannrades durch eine Zugkraftbelastung des betreffenden Spannarmes aufgenommen wird, wodurch eine geringere Federkraftbeaufschlagung zwischen den Spannarmen möglich wird.

Günstigerweise kann das Endlostriebrad zu dem Aggregat der Endlostriebanordnung gehören, welches das höchste Massenträgheitsmoment und/oder die höchsten Drehungleichförmigkeiten hat. So können auf besonders effektive Weise Längenverschiebungen im Endlostrieb ausgeglichen werden.

Vorzugsweise kann das Endlostriebrad zu dem Starter-Generator gehören. Bei einem Starter-Generator ändern sich Lasttrum und Leertrum bei einem Wechsel von Starter- auf Generatorbetrieb und umgekehrt. Die damit einhergehenden Längenverschiebungen im Endlostrieb werden somit am Ort ihrer Ursache kompensiert.

Vorzugsweise kann der Abstand der ersten Schwenkachse von der zweiten Schwenkachse mindestens ein Viertel des Abstandes der zweiten Schwenkachse von der ersten Drehachse und/oder der zweiten Drehachse betragen. Dadurch kann mit dem Spanner eine Verhaltenscharakteristik erreicht werden, welche sich deutlich von der Verhaltenscharakteristik eines herkömmlichen zweiarmigen Spanners mit V-artig angeordneten Spannarmen, das heißt mit nur einer Schwenkachse unterscheidet. Durch die Verkürzung des Abstandes der Drehachsen zu der für die Relativdrehung der Spannarme zuständigen Schwenkachse wird der Winkel zwischen einer die erste Drehachse mit der zweiten Schwenkachse verbindenden Linie und einer die zweite Drehachse mit der zweiten Schwenkachse verbindenden Linie groß genug, um einen deutlichen Teil der resultierenden Kraft des Spannrades, welches das Lasttrum spannt, über die gelenkige Verbindung der zweiten Schwenkachse aufzufangen. Hierdurch wird weniger Federspannkraft zum Spannen des Endlostriebes benötigt, das heißt ein deutlich verringertes Grundspannungsniveau im Endlostrieb ist möglich. Gleichzeitig trägt die genannte Geometrie zum Erhalten eines guten Umschlingungswinkels bei. Trotzdem ist der Spanner jedoch in der Lage, im Endlostrieb auftretende Spannungsspitzen gut abzumildern. Durch den Abstand zwischen der ersten und zweiten Schwenkachse kann der Spanner dennoch Längenverschiebungen im Endlostrieb folgen, wenn ein Wechsel von Lasttrum und Leertrum auftritt. Folglich sind mit einem solchen erfindungsgemäßen Spanner Abstände zwischen den Drehachsen und der zweiten Schwenkachse realisierbar, bei welchen ein herkömmlicher Spanner mit V-artig angeordneten Spannarmen und nur einer Schwenkachse oder ein sich beinahe wie ein solcher V-Spanner verhaltender Spanner Probleme hätte, Längenverschiebungen im Endlostrieb bei einem Wechsel von Lasttrum und Zugtrum gut zu folgen ohne den Umschlingungswinkel zu stark zu verringern oder das Grundspannungsniveau des Endlostriebes zu stark zu erhöhen.

Bevorzugterweise kann der Abstand der ersten Schwenkachse von der zweiten Schwenkachse mindestens ein Drittel, bevorzugt mindestens die Hälfte des Abstandes der zweiten Schwenkachse von der ersten Drehachse und/oder der zweiten Drehachse betragen. Hierbei kann der Umschlingungswinkel noch besser beibehalten und die Spannkraft zum Spannen der beiden Spannarme noch weiter abgesenkt werden. Gleichzeitig folgt der Spanner Längenverschiebungen im Endlostrieb gut.

Besonders bevorzugt kann der Abstand der ersten Schwenkachse von der zweiten Schwenkachse etwa so groß sein wie der Abstand der zweiten Schwenkachse von der ersten Drehachse und/oder der zweiten Drehachse. Bei dieser Anordnung lässt sich der Umschlingungswinkel besonders gut beibehalten, wobei die Kraft zum Spannen der beiden Spannarme nochmals verringert werden kann. Gleichzeitig kann der Spanner jedoch Spannungsspitzen im Endlostrieb gut ausgleichen und Längenverschiebungen im Endlostrieb bei einem Wechsel von Lasttrum und Leertrum gut folgen.

Vorteilhafterweise kann eine die erste und zweite Schwenkachse verbindende Linie mit einer die zweite Schwenkachse und die erste Drehachse verbindenden Linie einen stumpfen Winkel einschließen, vorzugsweise einen Winkel im Bereich von etwa 140° bis 175°. Hierdurch kann die Länge des zweiten Spannarmes gegenüber einer gestreckten Ausführung des ersten Spannarmes verkürzt werden, wodurch eine stärkere Öffnung des Winkels zwischen den beiden Spannarmen möglich wird. Dies kommt dem Beibehalten eines guten Umschlingungswinkels zu gute und ermöglicht eine weitere Reduzierung der Kraft zum Spannen der beiden Spannarme.

Besonders günstig kann entlang eines Umfanges einer Spiralfeder, welche den ersten und zweiten Spannarm relativ zueinander federkraftbeaufschlagt, eine Dämpfungsbuchse vorgesehen sein, gegen welche die Spiralfeder radial drückt, wenn sich ihr Durchmesser bei einem Bewegen der Spannarme relativ zueinander ändert. Hierdurch wird eine Dämpfung erzielt, welche sich um so stärker ändert, je weiter sich der Durchmesser der Spiralfeder ändert.

Besonders bevorzugt kann der Abstand der ersten Schwenkachse von der zweiten Schwenkachse mindestens ein Drittel, bevorzugt mindestens die Hälfte des Abstandes der zweiten Schwenkachse von der ersten Drehachse und/oder der zweiten Drehachse betragen.

Besonders vorteilhaft kann der Abstand der ersten Schwenkachse von der zweiten Schwenkachse etwa so groß sein wie der Abstand der zweiten Schwenkachse von der ersten Drehachse und/oder der zweiten Drehachse.

Günstigerweise kann eine die erste und zweite Schwenkachse verbindende Linie mit einer die zweiten Schwenkachse und der ersten Drehachse verbindenden Linie einen stumpfen Winkel einschließen, vorzugsweise einen Winkel im Bereich von etwa 140° bis 175°.

Besonders vorteilhaft kann ein Winkel, welcher zwischen einer die zweite Schwenkachse mit der ersten Drehachse verbindenden Linie und einer die zweite Schwenkachse mit der zweiten Drehachse verbindenden Linie eingeschlossen ist, etwa 60° bis 90° betragen.

Besonders bevorzugt kann entlang eines Umfanges einer Spiralfeder, welche den ersten und zweiten Spannarm relativ zueinander federkraftbeaufschlagt, eine Dämpfungsbuchse vorgesehen sein, gegen welche die Spiralfeder radial drückt, wenn sich ihr Durchmesser bei einem Bewegen der Spannarme relativ zueinander ändert.

Schutz wird beansprucht für eine Endlostriebanordnung mit einem Endlostrieb und einem Spanner mit wenigstens einem der vorangehend erläuterten Merkmale.

Eine Ausführungsform der vorliegenden Erfindung ist in der Zeichnung gezeigt und wird nachfolgend beschrieben. Es zeigen:
- Figur 1: eine Draufsicht auf einen erfindungsgemäßen Spanner,
- Figur 2: eine perspektivische Ansicht des Spanners,
- Figur 3: eine Schnittansicht des Spanners gemäß einer Linie III-III in Figur 2,
- Figur 4: ein Modell des erfindungsgemäßen Spanners in einer Riementriebanordnung in einer Ausgangsstellung,
- Figur 5: das Modell des Spanners in der Riementriebanordnung in einer von der Ausgangsstellung verschiedenen ersten Stellung und
- Figur 6: das Modell des Spanners in der Riementriebanordnung in einer von der Ausgangsstellung verschiedenen zweiten Stellung.

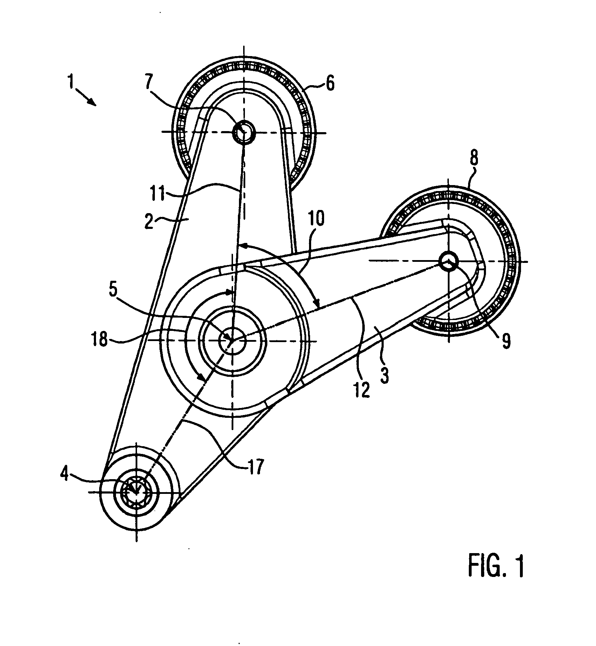

Figur 1 zeigt einen erfindungsgemäßen Spanner 1 in einer Draufsicht. Der Spanner weist einen ersten Spannarm 2 und einen zweiten Spannarm 3 auf. Der erste Spannarm 2 ist um eine erste Schwenkachse 4 schwenkbar. Der zweite Spannarm 3 ist um eine zweite Schwenkachse 5 schwenkbar federkraftbeaufschlagt an dem ersten Spannarm 2 angelenkt. Die zweite Schwenkachse 5 ist von der ersten Schwenkachse 4 beabstandet vorgesehen, das heißt exzentrisch zu dieser. Der erste Spannarm 2 trägt ein erstes Spannrad 6, welches um eine erste Drehachse 7 drehbar ist, und der zweite Spannarm 3 ein zweites Spannrad, welches um eine zweite Drehachse 9 drehbar ist. Die Spannräder 6, 8 sind in dieser Ausführungsform der Erfindung als Riemenräder ausgebildet. Es ist jedoch auch möglich, den Spanner als Kettenspanner mit Kettenrädern auszubilden, wobei der Spanner dann als Endlostrieb eine Kette spannt.

Der Abstand der ersten Schwenkachse 4 von der zweiten Schwenkachse 5 beträgt mindestens ein Viertel des Abstandes der zweiten Schwenkachse 5 von der ersten Drehachse 7 und/oder der zweiten Drehachse 9. Vorzugsweise beträgt der Abstand der ersten Schwenkachse 4 von der zweiten Schwenkachse 5 mindestens ein Drittel, besonders bevorzugt mindestens die Hälfte des Abstandes der zweiten Schwenkachse 5 von der ersten Drehachse 7 und/oder der zweiten Drehachse 9. Günstigerweise kann der Abstand der ersten Schwenkachse 4 von der zweiten Schwenkachse 5 auch etwa so groß gewählt werden, wie der Abstand der zweiten Schwenkachse 5 von der ersten Drehachse 7 und/oder der zweiten Drehachse 9. Im vorliegenden Ausführungsbeispiel ist die zweite Schwenkachse 5 etwa gleich weit von der ersten Schwenkachse 4, der ersten Drehachse 7 und der ersten Drehachse 9 beabstandet.

Je größer der Abstand der ersten Schwenkachse 4 von der zweiten Schwenkachse 5 ist, desto kleiner können die Abstände der zweiten Schwenkachse 5 von der ersten Drehachse 7 und der zweiten Drehachse 9 ausfallen. Dementsprechend größer kann auch ein Öffnungswinkel 10 zwischen einer die zweite Schwenkachse 5 mit der ersten Drehachse 7 verbindenden ersten Linie 11 und einer die zweite Schwenkachse 5 mit der zweiten Drehachse 9 verbindenden Linie 12 gewählt werden, insbesondere bei sonst gleicher Position der Spannräder 6, 8.

Der Öffnungswinkel kann beispielsweise in einem Bereich von 60° bis 90° gehalten werden. Je größer er ist, desto kleiner sind ein erster Winkel zwischen einer durch das erste Spannrad 6 eingeleiteten ersten resultierenden Kraft und der ersten Linie 11 sowie ein zweiter Winkel zwischen einer über das zweite Spannrad 8 eingeleiteten zweiten resultierenden Kraft und der zweiten Linie 12. Je kleiner der erste und der zweite Winkel sind, desto höher ist der Anteil der jeweiligen resultierenden Kraft, der als Zugkraft von dem betreffenden Spannarm aufgenommen wird. Hierdurch wird die zum Spannen der Spannarme 2, 3 notwendige Kraft geringer. Bei einem Öffnungswinkel der bereits im Bereich von 60° bis 90° liegt, öffnen sich die Spannarme auch nicht mehr so stark, wenn die Riemenspannung durch den Betrieb einer Riementriebanordnung stärker ansteigt. Das heißt ein Umschlingungswinkel eines Riemenrades, dessen Trums durch den Spanner 1 gespannt werden, verringert sich weniger stark.

Mit dem gemäß der vorliegenden Erfindung gewählten Abstand zwischen der ersten Schwenkachse 4 und der zweiten Schwenkachse 5 kann der Spanner 1 trotzdem Längenverschiebungen im Riemen gut folgen, welche beispielsweise bei einem Wechsel von Lasttrum und Leertrum auftreten.

Die erste Linie 11 schließt im vorliegenden Ausführungsbeispiel mit einer dritten Linie 17, welche die erste Schwenkachse 4 mit der zweiten Schwenkachse 5 verbindet, einen stumpfen Winkel 18 ein, welcher vorzugsweise im Bereich von 140° bis 175° liegt. Hierdurch kann, verglichen mit einer gestreckten Ausführungsform des ersten Spannarmes, die Länge des zweiten Spannarmes verkürzt werden, wodurch eine stärkere Öffnung des Öffnungswinkels möglich wird, insbesondere bei sonst gleicher Position der Spannräder 6, 8. Dies begünstigt zusätzlich das Beibehalten eines guten Umschlingungswinkels und erlaubt eine weitere Reduzierung der Kraft zum Spannen der beiden Spannarme 2, 3.

Es ist jedoch auch möglich, zwischen der ersten und der dritten Linie 11, 13, einen Winkel vorzusehen, welcher größer als 175° ist oder sogar einen Winkel von 180° vorzusehen. In anderen Ausführungsformen wäre auch auf Seiten des zweiten Spannrades 8 ein Winkel von 140° bis 175° oder größer zwischen der dritten und der ersten Linie 13, 11 möglich. Allgemein ausgedrückt kann der Winkel zwischen der ersten und der dritten Linie 11, 13 in einem Bereich von 180° +/- 40° liegen.

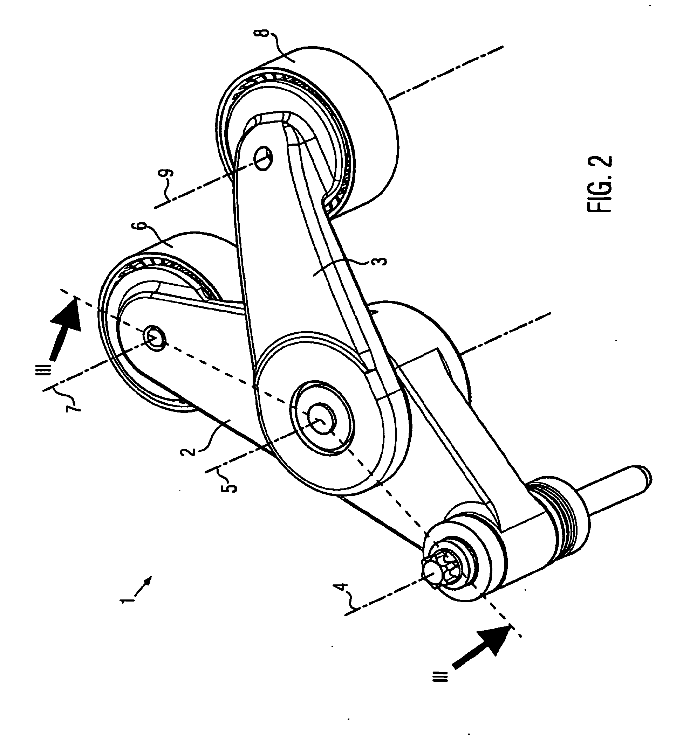

Figur 2 zeigt den erfindungsgemäßen Spanner 1 in einer perspektivischen Ansicht. Es ist gut zu erkennen, dass eine die Spannarme spannende Feder, welche im Bereich der zweiten Schwenkachse 5 untergebracht ist, wenig Bauraum in Anspruch nimmt. Der Bauraum kann um so kleiner ausfallen, je schwächer die zum Spannen benötigte Federkraft und somit die benötige Feder selbst ist. Das heißt die erfindungsgemäße Ausbildung des Spanners 1 und die damit erzielte Verringerung der notwendigen Spannkraft hat auch zu einer Reduktion des Bauvolumens geführt.

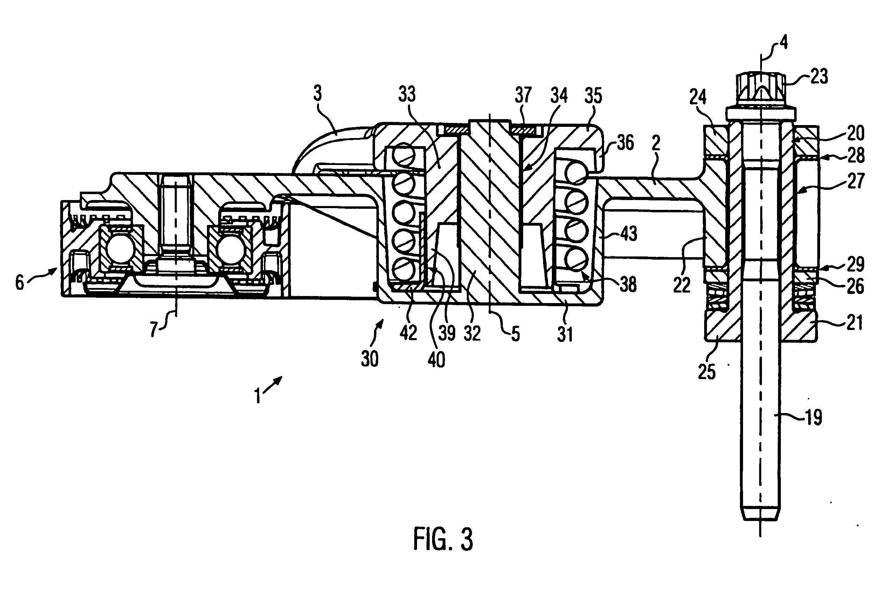

In Figur 3 ist der Spanner 1 in einer Schnittansicht gemäß einer Linie III-III in Figur 2 gezeigt. Mit einer Befestigungsschraube 19, welche sich durch einen Lagerbolzen 20 erstreckt, an welchem einstückig eine Grundplatte 21 vorgesehen ist, kann der Spanner 1 befestigt werden, beispielsweise an einem Verbrennungsmotor. Der Lagerbolzen 20 erstreckt sich durch ein Lagerauge 22 des ersten Spannarmes 2. Auf Seiten eines Kopfes 23 der Befestigungsschraube 19 erstreckt sich der Lagerbolzen 20 ferner durch eine Frontscheibe 24. Auf der gegenüberliegenden Seite erstreckt sich der Lagerbolzen 20 außerdem durch ein Tellerfederpaket 25, welches an der Grundplatte 21 anliegt, sowie durch eine Anpressscheibe 26, welche an dem Tellerfederpaket 25 anliegt. Zwischen dem Lagerauge 22 und dem Lagerbolzen 20 ist eine Lagerbuchse 27 vorgesehen, welche an ihren gegenüberliegenden Enden sich radial auswärts erstreckende Flansche 28, 29 hat. Die Lagerbuchse 27 ist in dieser Ausführungsform der Erfindung einstückig ausgeführt, kann jedoch auch zweistückig ausgebildet sein.

Die Lagerbuchse 27 hat eine Doppelfunktion. Einerseits lagert sie den ersten Spannarm 2 drehbeweglich. Zusätzlich dämpft sie seine Drehbewegung durch Reibdämpfung. Insbesondere wird Reibdämpfung mit Hilfe der beiden Flansche 28, 29 erzeugt, wobei das Tellerfederpaket 25 die Reibpartner der Flansche 28, 29 an diese drückt, nämlich einerseits die Frontscheibe 24 und das Lagerauge 22 und andererseits die Anpressscheibe 26 und das Lagerauge 22.

Anstatt der Flansche 28, 29 können auch zu der Lagerbuchse 27 separate Dämpfungsscheiben vorgesehen sein, welche beispielsweise als teflonbeschichtete Stahlscheiben ausgebildet sein können.

Der erste Spannarm ist frei um die erste Schwenkachse 4 drehbar, das heißt ohne Federkraftbeaufschlagung.

Der erste Spannarm 2 weist ein etwa topfartig ausgebildetes Federgehäuse 30 auf. Von einem Boden 31 des Federgehäuses erstreckt sich einstückig ein zweiter Lagerbolzen 32. Der zweite Lagerbolzen 32 erstreckt sich durch ein Lagerauge 33 des zweiten Spannarmes 3. Zwischen dem Lagerauge 33 und dem zweiten Lagerbolzen 32 ist eine zweite Lagerbuchse 34 vorgesehen, mit welcher der zweite Spannarm 3 drehbeweglich an dem zweiten Lagerbolzen 32 gelagert ist. Von dem Lagerauge 33 des zweiten Spannarmes 3 erstreckt sich radial auswärts ein Federdeckel 35 mit einem axial in Richtung zu dem Boden 31 vorstehenden Kragen 36. Das Lagerauge 33 und der einstückig mit ihm ausgebildete Federdeckel 35 werden durch eine zweite Frontscheibe 37 axial an dem zweiten Lagerbolzen 32 gegen eine axiale Kraft einer Spiralfeder 38 gesichert.

In der vorliegenden Ausführungsform ist der zweite Lagerbolzen 32 zylinderförmig ausgebildet. Es ist auch möglich, statt dessen ein Kegellager vorzusehen, welches sich von dem Boden 31 weg verjüngt. Statt der hohlzylindrischen zweiten Lagerbuchse 34 wäre dann eine sich von dem Boden 31 weg verjüngende Lagerbuchse vorgesehen und eine zur Außenumfangsseite dieser Lagerbuchse korrespondierende Innenumfangsfläche des Lagerauges würde sich von dem Boden 31 weg ebenfalls verjüngen.

Die Spiralfeder 38 federbeaufschlagt die Spannarme 2, 3 zueinander. Je stärker die Spannarme 2, 3 durch Riemenkräfte auseinandergedrückt werden, desto stärker verringert sich der Durchmesser der Spiralfeder 38. Hierdurch umschlingt sie eine zwischen ihr und einem axialen Fortsatz 39 des Lagerauges 33 vorgesehene geschlitzte Dämpfungsbuchse 40 stärker. Das heißt die Spiralfeder 38 vergrößert die Kraft, mit welcher die Dämpfungsbuchse 40 an dem Lagerauge 33 des zweiten Spannarmes 3, insbesondere an dessen axialen Fortsatz 39 reibt, wodurch die Dämpfungskraft zunimmt. Ein bodenseitiges Ende 41 der Spiralfeder 38 ist dabei drehfest zu einem sich radial auswärts erstreckenden Flansch 42 der Dämpfungsbuchse 40 vorgesehen.

Alternativ könnte die Feder 38 so vorgesehen sein, dass sie sich radial weitetet, wenn die Spannarme 2, 3 durch Riemenkräfte auseinandergedrückt werden. Dann kann eine Dämpfungsbuchse zwischen der Spiralfeder und einer Zylinderwandung 43 des Federgehäuses 30 vorgesehen sein und sich bei einem Relativschwenken der Spannarme relativ zu der Zylinderwandung 43 drehen und an dieser reiben.

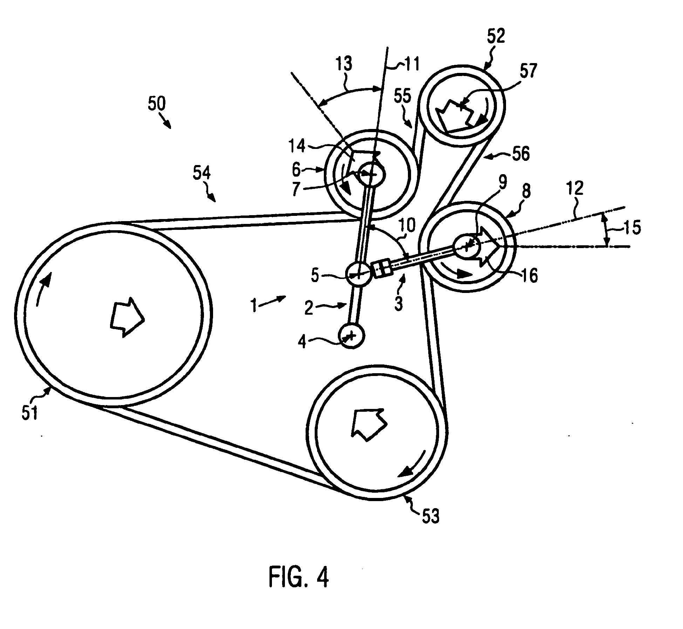

Figuren 4 bis 6 zeigen ein Simulationsmodell einer erfindungsgemäßen Riementriebanordnung 50 mit einem Simulationsmodell des erfindungsgemäßen Spanners 1 in unterschiedlichen Betriebssituationen. Die Riementriebanordnung weist beispielhaft ein mit einer Kurbelwelle eines Verbrennungsmotors verbundenes Kurbelwellenriemenrad 51, ein Riemenrad 52 eines Starter-Generators und ein weiteres Riemenrad 53 auf, das beispielsweise mit einem Klimakompressor verbunden sein kann. In dieser Ausführungsform der Erfindung ist der Starter-Generator ein elektrischer Generator zum Erzeugen von Strom, welcher auch als elektrischer Motor arbeiten kann.

Um die Riemenräder ist als Endlostrieb ein Riemen 54 geführt. Der Riemen 54 wird gespannt, indem das erste Spannrad 6 an einem ersten Riemenabschnitt 55 anliegt, welcher sich zwischen dem Kurbelwellenriemenrad 51 und dem Riemenrad 52 des Starter-Generators erstreckt, und indem das zweite Spannrad 8 an einem zweiten Riemenabschnitt 56 anliegt, welcher sich zwischen dem Riemenrad 52 des Starter-Generators und dem Riemenrad 53 des Klimakompressors erstreckt. Die Spannräder 6, 8 drücken von außen gegen die Riemenabschnitte 55, 56.

In Figur 4 befindet sich der Spanner 1 in einer spannenden Ausgangsstellung. Der Motor läuft und die Generatorlast des Starter-Generators ist Null.

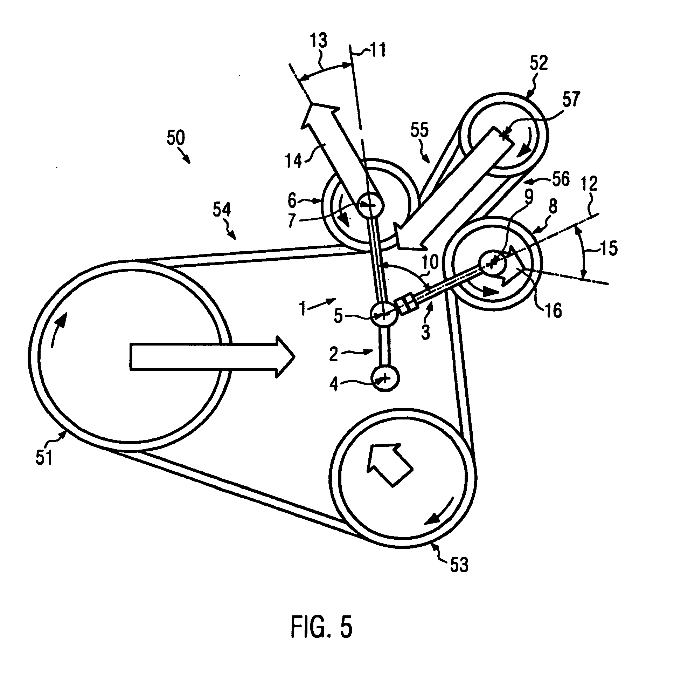

Wird der Starter-Generator in einer Boostfunktion eingesetzt, um die Kurbelwelle zusätzlich zu der durch Verbrennung erzeugten Kraft anzutreiben, muss der Starter-Generator den Motor über das Kurbelwellenriemenrad 51 schleppen. Der erste Riemenabschnitt 55 wird Lasttrum und spannt sich. Dagegen wird der zweite Riemenabschnitt 56 Leertrum und entspannt sich. Der Spanner 1 schwenkt um die erste Schwenkachse 4 in Richtung zu dem ersten Riemenabschnitt 55 und gleicht hierdurch die entstandene Längenverschiebung der Riemenabschnitte aus, nämlich die Verkürzung des ersten Riemenabschnittes 55 und die Verlängerung des zweiten Riemenabschnittes 56. Nach dem Schwenken befindet sich der Spanner 1 in einer von der in Figur 4 gezeigten Ausgangsstellung verschiedenen ersten Stellung, die in Figur 5 gezeigt ist. Der erste Winkel 13 zwischen der ersten resultierenden Kraft 14 und der ersten Linie 11 ist auf einen Wert von weniger als 30° gesunken, im vorliegenden Ausführungsbeispiel sogar auf einen Wert, der kleiner als 25° ist. Damit wird der wesentliche Teil der ersten resultierenden Kraft 14 als Zugkraft von dem ersten Spannarm 2 aufgenommen und von der zur ersten Schwenkachse 4 gehörenden Lagerung aufgenommen. Nur ein kleiner Teil der ersten resultierenden Kraft greift quer zu der ersten Linie 11 an und muss durch die die beiden Spannarme spannende Spiralfeder 38 aufgefangen werden, wobei sich der zweite Spannarm 3 entsprechend mit seinem zweiten Spannrad 8 an dem zweiten Riemenabschnitt 56 abstützt.

Die zweite resultierende Kraft 16, die an dem zweiten Spannrad 8 angreift, ist gering und die notwendige Spannung im zweiten Riemenabschnitt 56 wird durch die Spiralfeder 38 problemlos aufrechterhalten.

Gegenüber der Darstellung in Figur 4 ist der Öffnungswinkel 10 im Wesentlichen gleich geblieben. Er hat sich nur geringfügig geöffnet um einen Betrag von weniger als 10°, im vorliegenden Ausführungsbeispiel um einen Betrag von weniger als 5°. Damit ist der Umschlingungswinkel des Riemens 54 um das Riemenrad 52 im Wesentlichen gleich geblieben, so dass die Übertragungskapazität zwischen dem Riemen 54 und dem Riemenrad 52 im Wesentlichen gleich geblieben ist.

Eine ähnliche Betriebssituation wie die in Figur 5 gezeigte tritt auf, wenn der Motor durch den Starter-Generator gestartet wird.

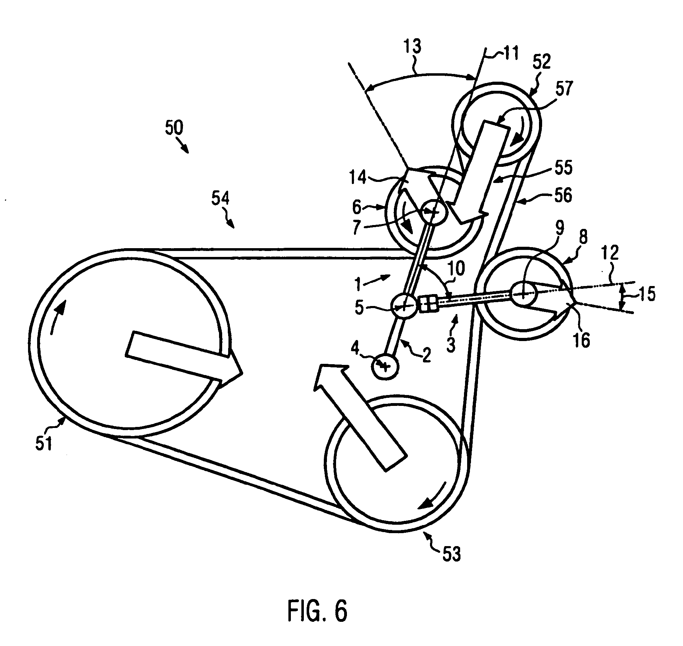

Wenn der Starter-Generator vom Starter- oder Motorbetrieb in den Generatorbetrieb wechselt, muss er vom Verbrennungsmotor über den Riemen 54 angetrieben werden. Der zweite Riemenabschnitt 56 wird zum Lasttrum und spannt sich. Dagegen wird der erste Riemenabschnitt 55 zum Leertrum und entspannt sich. Der Spanner 1 schwenkt um die erste Schwenkachse 4 in Richtung zu dem zweiten Riemenabschnitt 56 und gleicht so die Längenverschiebung der Riemenabschnitte aus, nämlich die Verkürzung des zweiten Riemenabschnittes 56 und die Verlängerung des ersten Riemenabschnittes 55. Nach dem Abschluss des Schwenkens erreicht der Spanner 1 die in Figur 6 gezeigte von der in Figur 4 gezeigten Ausgangsstellung verschiedene zweite Stellung. Die zweite resultierende Kraft 16 ist größer als die erste resultierende Kraft 14. Der zweite Winkel 15 hat sich auf einen Wert verringert, der deutlich kleiner ist als 30°, sogar auf einen Wert der kleiner als 20° ist. Bei der vorliegenden Ausführungsform der Erfindung ist er kleiner als 15°. Hierdurch wird der wesentliche Teil der zweiten resultierenden Kraft 16 als Zugkraft in den zweiten Spannarm 3 eingeleitet und durch die zu der zweiten Schwenkachse 5 gehörende Lagerung in den ersten Spannarm 2 eingeleitet. Diese Kraft wird einerseits durch die zu der ersten Schwenkachse 4 gehörende Lagerung aufgefangen und andererseits dadurch, dass sich der erste Spannarm 2 über das erste Spannrad 6 an dem ersten Riemenabschnitt 55 abstützt. Trotzdem bleibt die erste resultierende Kraft 14 noch kleiner als die zweite resultierende Kraft 16, wobei beide deutlich kleiner sind als die erste resultierende Kraft 14 in der in Figur 5 gezeigten Betriebssituation. Die Spiralfeder 38 kann problemlos die verbleibenden Komponenten der resultierenden Kräfte 14, 16 kompensieren, welche die Spannarme auseinanderdrücken.

Auch beim Wechsel in die zweite Stellung hat sich der Öffnungswinkel nicht wesentlich verändert. Gegenüber der in Figur 5 gezeigten Betriebssituation hat er sich um weniger als 10°, im vorliegenden Fall sogar weniger als 5° verändert, hier verkleinert. Dies hat zum Beibehalten eines guten Umschlingungswinkels beigetragen.

Der Umschlingungswinkel des Riemenrades 52 des Starter-Generators hat sich durch die Geometrie des Spanners und die Positionierung der Schwenkachse 4 noch zusätzlich vergrößert. Die erste Schwenkachse 4 ist an einer Position vorgesehen, bei welcher das erste Spannrad 6 bei einem Schwenken des Spanners 1 von der ersten Stellung in die zweite Stellung seinen Abstand zu dem Riemenrad 52 des Starter-Generators verringert. Die erste Drehachse 7 schwenkt dabei hin zu einer die erste Schwenkachse 4 und eine Drehachse 57 verbindenden (nicht gezeigten) Linie. Ferner ist die Geometrie so gewählt, dass der Abstand der zweiten Drehachse 9 von der Schwenkachse 4 etwas kleiner ist als der Abstand der ersten Drehachse 7 zu der ersten Schwenkachse 4. Dadurch nähert sich das erste Spannrad 6 dem Riemenrad 52 des Starter-Generators stärker an als sich das zweite Spannrad 8 beim Schwenken des Spanners in die zweite Stellung von dem Riemenrad 52 des Starter-Generators entfernt.

Bei der vorliegenden Ausführungsform der Erfindung ist der erste Spannarm 2 dem Trum zugeordnet, bei welchem im Betrieb der Riementriebanordnung die höchsten Riemenspannungen auftreten, nämlich dem ersten Riemenabschnitt 55. Damit kann von der höchsten auftretenden resultierenden Kraft ein wesentlicher Teil als Zugkraft in den ersten Spannarm 2 eingeleitet und direkt von der zu der ersten Schwenkachse 4 gehörenden Lagerung des Spanners 1 aufgenommen werden. Dies trägt ebenfalls dazu bei, die für das Spannen der beiden Spannarme notwendige Federkraft zu verringern.

## Patentansprüche

1. Endlostriebanordnung (50), insbesondere für Verbrennungsmotoren, mit einem Endlostrieb (54), welcher um ein Endlostriebrad (52) der Endlostriebanordnung (50) geführt ist, einem Starter-Generator und einem Spanner (1), welcher einen ersten Spannarm (2) und einen zweiten Spannarm (3) aufweist, wobei der erste und der zweite Spannarm (2, 3) um eine gemeinsame erste Schwenkachse (4) schwenkbar sind, und wobei an dem ersten Spannarm (2) ein um eine erste Drehachse (7) drehbares und an einem ersten Trum (55) des Endlostriebrades (52) spannend anliegendes erstes Spannrad (6) vorgesehen ist und an dem zweiten Spannarm (3) ein um eine zweite Drehachse (9) drehbares und an einem zweiten Trum (56) des Endlostriebrades (52) spannend anliegendes zweites Spannrad (8), und das erste Trum (55) Zugtrum ist, wenn sich der Starter-Generator in einem antreibenden Betriebszustand befindet, und das zweite Trum (56) Zugtrum ist, wenn sich der Starter-Generator in einem Strom erzeugenden Betriebszustand befindet,
**dadurch gekennzeichnet,**
**dass** der zweite Spannarm (3) um eine von der ersten Schwenkachse (4) beabstandete zweite Schwenkachse (5) schwenkbar an dem ersten Spannarm (2) kraftbeaufschlagt angelenkt ist, und beide Spannarme (2, 3) um diese zweite Schwenkachse (5) in Richtung zueinander kraftbeaufschlagt schwenkbar sind.

2. Endlostriebandordnung (50) nach Anspruch 1,
**dadurch gekennzeichnet,**
**dass** eine Spiralfeder (38) so angeordnet ist, dass sie kraftbeaufschlagend auf die beiden Spannarme (2, 3) wirkt.

3. Endlostriebanordnung (50) nach Anspruch 1 oder 2,
**dadurch gekennzeichnet,**
**dass** entlang eines Umfanges der Spiralfeder (38), welche den ersten und zweiten Spannarm (2, 3) relativ zueinander federkraftbeaufschlagt, eine Dämpfungsbuchse (40) vorgese-hen ist, gegen welche die Spiralfeder (38) radial drückt, wenn sich ihr Durchmesser bei einem Bewegen der Spannarme (2, 3) relativ zueinander ändert.

4. Endlostriebanordnung (50), nach einem der vorhergehenden Ansprüche,
**dadurch gekennzeichnet,**
**dass** der Spanner (1) zwischen einer ersten Stellung, in welcher, wenn das erste Trum (55) Zugtrum ist, eine resultierende Kraft (14) an dem ersten Spannrad (6) mit einer die zweite Schwenkachse (5) und die erste Drehachse (7) verbindenden Linie (11) einen ersten Winkel (13) einschließt, der kleiner als 30°, vorzugsweise kleiner als 25°, besonders bevorzugt 20° und meist bevorzugt kleiner als 15° ist, und einer zweiten Stellung bewegbar ist, in welcher, wenn das zweite Trum (56) Zugtrum ist, eine resultierende Kraft (16) an dem zweiten Spannrad (8) mit einer die zweite Schwenkachse (5) und die zweite Drehachse (9) verbindenden Linie (12) einen zweiten Winkel (15) einschließt, der kleiner als 30°, vorzugsweise kleiner als 25°, besonders bevorzugt 20° und meist bevorzugt kleiner als 15° ist.

5. Endlostriebanordnung nach einem der vorhergehenden Ansprüche,
**dadurch gekennzeichnet,**
**dass** der erste Spannarm (2) dem Trum (55) zugeordnet ist, bei welchem im Betrieb der Endlostriebanordnung (50) die höchsten Endlostriebspannungen auftreten.

6. Endlostriebanordnung nach einem der vorhergehenden Ansprüche,
**dadurch gekennzeichnet,**
**dass** ein Winkel (10), welcher zwischen einer die zweite Schwenkachse (5) mit der ersten Drehachse (7) verbindenden Linie (11) und einer die zweite Schwenkachse (5) mit der zweiten Drehachse (9) verbindenden Linie (12) eingeschlossen ist, während eines Bewegens des Spanners (1) von einer ersten Stellung, in welcher das erste Trum (55) Zugtrum ist, in eine zweite Stellung, in welcher das zweite Trum (56) Zugtrum ist, und/oder umgekehrt sich um weniger als 10°, vorzugsweise um weniger als 5° ändert und besonders bevorzugt im Wesentlichen gleich bleibt.

7. Endlostriebanordnung nach einem der vorhergehenden Ansprüche,
**dadurch gekennzeichnet,**
**dass** ein Winkel (10), welcher zwischen einer die zweite Schwenkachse (5) mit der ersten Drehachse (7) verbindenden Linie (11) und einer die zweite Schwenkachse (5) mit der zweiten Drehachse (9) verbindenden Linie (12) eingeschlossen ist, etwa 60° bis 90° beträgt.

8. Endlostriebanordnung nach einem der vorhergehenden Ansprüche,
**dadurch gekennzeichnet,**
**dass** das Endlostriebrad (52) zu dem Aggregat der Endlostriebanordnung (50) gehört, welches das höchste Massenträgheitsmoment und/oder die höchsten Drehungleichförmigkeiten hat.

9. Endlostriebanordnung nach einem der vorhergehenden Ansprüche,
**dadurch gekennzeichnet,**
**dass** das Endlostriebrad (52) zu dem Starter-Generator gehört.

10. Endlostriebanordnung nach einem der vorhergehenden Ansprüche,
**dadurch gekennzeichnet,**
**dass** der Abstand der ersten Schwenkachse (4) von der zweiten Schwenkachse (5) mindestens ein Viertel, vorzugsweise ein Drittel, und besonders bevorzugt mindestens die Hälfte des Abstandes der zweiten Schwenkachse (5) von der ersten Drehachse (7) und/oder der zweiten Drehachse (9) beträgt, und der Abstand der ersten Schwenkachse (4) von der zweiten Schwenkachse (5) meist bevorzugt etwa so groß ist wie der Abstand der zweiten Schwenkachse (5) von der ersten Drehachse (7) und/oder der zweiten Drehachse (9).

11. Endlostriebanordnung nach einem der vorhergehenden Ansprüche,
**dadurch gekennzeichnet,**
**dass** eine die erste und zweite Schwenkachse (4, 5) verbindende Linie (17) mit einer die zweite Schwenkachse (5) und die erste Drehachse (7) verbindenden Linie (11) einen stumpfen Winkel (18) einschließt, vorzugsweise einen Winkel im Bereich von etwa 140° bis 175°.

## Claims

1. An endless drive arrangement (50), in particular for internal combustion engines, that comprises an endless drive (54) guided around an endless driving wheel (52) of the endless drive arrangement (50), a starter-generator and a tensioner (1) comprising a first tensioning arm (2) and a second tensioning arm (3), the first and the second tensioning arms (2, 3) being pivotable about a common first pivot axis (4), and a first tensioning pulley (6) that is rotatable about a first axis of rotation (7) and that rests against a first strand (55) of the endless driving wheel (52) so as to tension the same is provided on the first tensioning arm (2), and a second tensioning pulley (8) that is rotatable about a second axis of rotation (9) and that rests against a second strand (56) of the endless driving wheel (52) so as to tension the same is provided on the second tensioning arm (3), and the first strand (55) is the tight side when the starter-generator is in an operating state in which it drives the engine, and the second strand (56) is the tight side when the starter-generator is in an operating state in which it generates electricity,
**characterised in that**
the second tensioning arm (3) is articulated, through application of a force, to the first tensioning arm (2) so as to be pivotable about a second pivot axis (5) that is located at a distance from the first pivot axis (4), both tensioning arms (2, 3) being pivotable, through application of a force, about this second pivot axis (5) in a direction towards each other.

2. Endless drive arrangement (50) according to claim 1,
**characterised in that**
a coil spring (38) is arranged such that it acts on the two tensioning arms (2, 3) by applying a force on them.

3. Endless drive arrangement (50) according to claim 1 or 2,
**characterised in that**
a damping bush (40) is provided along the periphery of the coil spring (38) that spring-loads the first and the second tensioning arms (2, 3) relative to each other, and the coil spring (38) presses radially against the damping bush (40) when its diameter alters during a movement of the tensioning arms (2, 3) relative to each other.

4. Endless drive arrangement (50), according to one of the preceding claims, **characterised in that**
the tensioner (1) can be moved between a first position, in which, when the first strand (55) is the tight side, a resulting force (14) on the first tensioning pulley (6) and a line (11) connecting the second pivot axis (5) to the first axis of rotation (7) form a first angle (13) that is smaller than 30°, preferably smaller than 25°, more preferably 20° and most preferably smaller than 15°, and a second position, in which, when the second strand (56) is the tight side, a resulting force (16) on the second tensioning pulley (8) and a line (12) connecting the second pivot axis (5) to the second axis of rotation (9) form a second angle (15) which is smaller than 30°, preferably smaller than 25°, more preferably 20° and most preferably smaller than 15°.

5. Endless drive arrangement according to one of the preceding claims, **characterised in that**
the first tensioning arm (2) is assigned to the strand (55), in which the maximum endless drive tensions occurs during the operation of the endless drive arrangement (50).

6. Endless drive arrangement according to one of the preceding claims, **characterised in that**
an angle (10), which is formed between a line (11) connecting the second pivot axis (5) to the first axis of rotation (7) and a line (12) connecting the second pivot axis (5) to the second axis of rotation (9) alters by less than 10°, preferably by less than 5° and even more preferably remains substantially constant during a movement of the tensioner (1) from a first position, in which the first strand (55) is the tight side, into a second position in which the second strand (56) is the tight side, and/or vice versa.

7. Endless drive arrangement according to one of the preceding claims, **characterised in that**
an angle (10), which is formed between a line (11) connecting the second pivot axis (5) to the first axis of rotation (7) and a line (12) connecting the second pivot axis (5) to the second axis of rotation (9), is in the range of approximately 60° to 90°.

8. Endless drive arrangement according to one of the preceding claims, **characterised in that**
the endless driving wheel (52) is part of that equipment assembly of the endless drive arrangement (50) which has the greatest moment of inertia and/or the greatest rotational non-uniformities.

9. Endless drive arrangement according to one of the preceding claims, **characterised in that**
the endless driving wheel (52) is part of the starter-generator.

10. Endless drive arrangement according to one of the preceding claims, **characterised in that**
the distance of the first pivot axis (4) from the second pivot axis (5) is at least a quarter, preferably a third and even more preferably at least half of the distance of the second pivot axis (5) from the first axis of rotation (7) and/or the second axis of rotation (9), and the distance of the first pivot axis (4) from the second pivot axis (5) is most preferably approximately as large as the distance of the second pivot axis (5) from the first axis of rotation (7) and/or the second axis of rotation (9).

11. Endless drive arrangement according to one of the preceding claims, **characterised in that**
a line (17) connecting the first and the second pivot axes (4, 5) and a line (11) connecting the second pivot axis (5) to the first axis of rotation (7) form an obtuse angle (18), preferably an angle ranging from approximately 140° to 175°.

## Revendications

1. Agencement de transmission d'entraînement sans fin (50), notamment pour des moteurs à combustion interne, comprenant un élément de transmission d'entraînement sans fin (54), qui est guidé autour d'une roue de transmission d'entraînement sans fin (52) de l'agencement de transmission d'entraînement sans fin (50), un alterno-démarreur et un tendeur (1) qui présente un premier bras de tendeur (2) et un deuxième bras de tendeur (3), agencement
dans lequel le premier et le deuxième bras de tendeur (2, 3) peuvent pivoter autour d'un premier axe de pivotement (4) commun, et
dans lequel sur le premier bras de tendeur (2) est prévue une première roue de tendeur (6), qui peut tourner autour d'un premier axe de rotation (7), et qui s'applique, en le tendant, sur un premier brin (55) de la roue de transmission d'entraînement sans fin (52), et sur le deuxième bras de tendeur (3) est prévue une deuxième roue de tendeur (8), qui peut tourner autour d'un deuxième axe de rotation (9), et qui s'applique, en le tendant, sur un deuxième brin (56) de la roue de transmission d'entraînement sans fin (52), et le premier brin (55) constitue le brin de traction lorsque l'alterno-démarreur se trouve dans un état de fonctionnement moteur, et le deuxième brin (56) constitue le brin de traction lorsque l'alterno-démarreur se trouve dans un état de fonctionnement produisant du courant,
**caractérisé**
**en ce que** le deuxième bras de tendeur (3) est articulé, en étant sollicité par une force, sur le premier bras de tendeur (2), de manière à pouvoir pivoter autour d'un deuxième axe de pivotement (5) situé à distance du premier axe de pivotement (4), et les deux bras de tendeur (2, 3) peuvent pivoter autour de ce deuxième axe de pivotement (5) en étant sollicités par une force dans une direction l'un vers l'autre.

2. Agencement de transmission d'entraînement sans fin (50) selon la revendication 1,
**caractérisé**
**en ce qu'**un ressort spiral (38) est agencé de manière à agir sur les deux bras de tendeur (2, 3) en les sollicitant par une force.

3. Agencement de transmission d'entraînement sans fin (50) selon la revendication 1 ou la revendication 2, **caractérisé**
**en ce que** le long d'une périphérie du ressort spiral (38), qui sollicite par une force le premier et le deuxième bras de tendeur (2, 3) l'un par rapport à l'autre, il est prévu une cartouche d'amortissement (40) contre laquelle vient presser radialement le ressort spiral (38), lorsque son diamètre varie, au cours d'un mouvement relatif mutuel des bras de tendeur (2, 3).

4. Agencement de transmission d'entraînement sans fin (50) selon l'une des revendications précédentes, **caractérisé**
**en ce que** le tendeur (1) est mobile entre une première position dans laquelle, lorsque le premier brin (55) constitue le brin de traction, une force résultante (14) au niveau de la première roue de tendeur (6) forme, avec une ligne (11) reliant le deuxième axe de pivotement (5) et le premier axe de rotation (7), un premier angle (13), qui est inférieur à 30°, de préférence est inférieur à 25°, de manière particulièrement préférée est de 20°, et de manière la plus préférée est inférieur à 15°, et une deuxième position dans laquelle, lorsque le deuxième brin (56) constitue le brin de traction, une force résultante (16) au niveau de la deuxième roue de tendeur (8) forme, avec une ligne (12) reliant le deuxième axe de pivotement (5) et le deuxième axe de rotation (9), un deuxième angle (15), qui est inférieur à 30°, de préférence est inférieur à 25°, dé manière particulièrement préférée est de 20°, et de manière la plus préférée est inférieur à 15°.

5. Agencement de transmission d'entraînement sans fin selon l'une des revendications précédentes, **caractérisé**
**en ce que** le premier bras de tendeur (2) est associé au brin (55), pour lequel apparaissent en fonctionnement de l'agencement de transmission d'entraînement sans fin (50), les tensions de transmission d'entraînement sans fin les plus élevées.

6. Agencement de transmission d'entraînement sans fin selon l'une des revendications précédentes, **caractérisé**
**en ce qu'**un angle (10), qui est formé entre une ligne (11) reliant le deuxième axe de pivotement (5) au premier axe de rotation (7), et une ligne (12) reliant le deuxième axe de pivotement (5) au deuxième axe de rotation (9), au cours d'un mouvement du tendeur (1) d'une première position dans laquelle le premier brin (55) constitue le brin de traction, à une deuxième position dans laquelle le deuxième brin (56) constitue le brin de traction, et/ou inversement, varie de moins de 10°, de préférence de moins de 5°, et, de manière particulièrement préférée, reste sensiblement identique.

7. Agencement de transmission d'entraînement sans fin selon l'une des revendications précédentes, **caractérisé**
**en ce qu'**un angle (10), qui est formé entre une ligne (11) reliant le deuxième axe de pivotement (5) au premier axe de rotation (7), et une ligne (12) reliant le deuxième axe de pivotement (5) au deuxième axe de rotation (9), vaut environ 60° à 90°.

8. Agencement de transmission d'entraînement sans fin selon l'une des revendications précédentes, **caractérisé**
**en ce que** la roue de transmission d'entraînement sans fin (52) fait partie de l'appareil de l'agencement de transmission d'entraînement sans fin (50), qui a le moment d'inertie de masse le plus élevé et/ou les irrégularités de rotation les plus élevées.

9. Agencement de transmission d'entraînement sans fin selon l'une des revendications précédentes, **caractérisé**
**en ce que** la roue de transmission d'entraînement sans fin (52) fait partie de l'alterno-générateur.

10. Agencement de transmission d'entraînement sans fin selon l'une des revendications précédentes, **caractérisé**
**en ce que** la distance du premier axe de pivotement (4) au deuxième axe de pivotement (5) vaut au moins un quart, de préférence un tiers, et de manière particulièrement préférée au moins la moitié de la distance du deuxième axe de pivotement (5) au premier axe de rotation (7) et/ou au deuxième axe de rotation (9), et la distance du premier axe de pivotement (4) au deuxième axe de pivotement (5) est de manière la plus préférée, environ aussi grande que la distance du deuxième axe de pivotement (5) au premier axe de rotation (7) et/ou au deuxième axe de rotation (9).

11. Agencement de transmission d'entraînement sans fin selon l'une des revendications précédentes, **caractérisé**
**en ce qu'**une ligne (17) reliant le premier et le deuxième axe de pivotement (4, 5) forme, avec une ligne (11) reliant le deuxième axe de pivotement (5) et le premier axe de rotation (7), un angle obtus (18), de préférence un angle situé dans une plage d'environ 140° à 175°.
